# EUROPEAN PATENT SPECIFICATION

(11) **EP 3 028 008 B1**
(45) Date of publication and mention of the grant of the patent: **02.12.2020**
(21) Application number: 14750865.9
(22) Date of filing: 24.07.2014
(51) Int. Cl.: G01C 21/20

(54) **METHODS AND APPARATUS FOR DETERMINING THE ORIENTATION OF A MOBILE PHONE IN AN INDOOR ENVIRONMENT**
VERFAHREN UND VORRICHTUNG ZUR BESTIMMUNG DER ORIENTIERUNG EINES MOBILTELEFONS IN INNENRÄUMEN
PROCÉDÉS ET APPAREIL PERMETTANT DE DÉTERMINER L'ORIENTATION D'UN TÉLÉPHONE MOBILE DANS UN ENVIRONNEMENT INTÉRIEUR

(30) Priority: 30.07.2013 US 201313954356
(43) Date of publication of application: 08.06.2016
(73) Proprietor: Qualcomm Incorporated, San Diego, CA 92121-1714 (US)
(72) Inventor: JOVICIC, Aleksandar, San Diego, California 92121-1714 (US)
(74) Representative: Dunlop, Hugh Christopher
(86) International application number: PCT/US2014/047949
(87) International publication number: WO 2015/017231

(56) References cited:
- WO-A2-2006/065563
- US-A1- 2010 322 635
- US-A1- 2013 141 554
- US-A1- 2013 141 565

## Description

### BACKGROUND

### Field

The present disclosure relates generally to mobile devices, and more particularly, to methods and apparatus for determining the orientation of a mobile phone in an indoor environment.

### Background

Determination of the orientation of a mobile device in indoor environments may be useful in a number of applications. For example, the orientation of a mobile device may be needed to navigate mobile phone users in office/commercial environments, to enable customers to find items in a supermarket or retail outlet, for coupon issuance and redemption, and for customer service and accountability. However, achieving precise orientation estimates in indoor venues is a challenging task. Mobile devices typically estimate their orientation using a compass that is built in to the mobile devices. Such orientation estimates, however, are often highly inaccurate due to the presence of metallic objects inside walls, door frames, and furniture in most indoor venues.

US 2013/0141554A1 relates to a system and method for providing the position of a mobile device based on light received from one or more light sources. US 2013/0141565A1 relates to a method and system for location determination and navigation using structural visual information.

### SUMMARY

In an aspect of the disclosure, a method as defined in claim 1, an apparatus as defined in claim 9 and a computer program product as defined in claim 15 are provided.

### BRIEF DESCRIPTION OF THE DRAWINGS

FIG. 1 is a diagram illustrating a top view of an indoor venue including a mobile device.
FIG. 2A is a diagram illustrating a mobile device.
FIG. 2B is a diagram illustrating a map of an indoor venue.
FIG. 3 is a flowchart of a method for a mobile device.
FIG. 4 is a flowchart of a method for a mobile device.
FIG. 5 is a conceptual data flow diagram illustrating the data flow between different modules/means/components in an exemplary apparatus.
FIG. 6 is a diagram illustrating an example of a hardware implementation for an apparatus employing a processing system.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of a mobile device will now be presented with reference to various apparatus and methods. These apparatus and methods will be described in the following detailed description and illustrated in the accompanying drawings by various blocks, modules, components, circuits, steps, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

Accordingly, in one or more exemplary embodiments, the functions described may be implemented in hardware, software, firmware, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), and floppy disk where disks usually reproduce data magnetically, while discs reproduce data optically with lasers. Combinations of the above should also be included within the scope of computer-readable media.

As used herein, the term mobile device may refer to a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, or any other similar functioning device. Moreover, the term mobile device may also be referred to by those skilled in the art as a mobile station, a subscriber station, a mobile unit, a subscriber unit, a wireless unit, a remote unit, a wireless device, a remote device, a mobile subscriber station, an access terminal, a mobile terminal, a wireless terminal, a remote terminal, a handset, a user agent, a mobile client, a client, or some other suitable terminology.

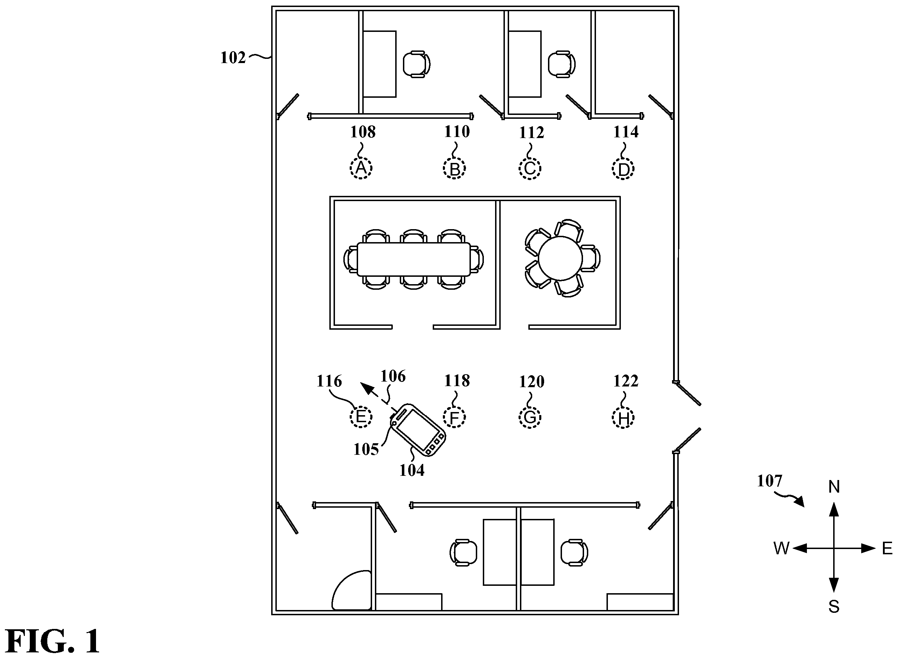

FIG. 1 is a diagram illustrating a top view of an indoor venue including a mobile device 104. In the configuration of FIG. 1, the indoor venue is a floor 102 of an office building. For example, the mobile device 104 may be held by a user who is stationary or moving on the floor 102. In the configuration of FIG. 1, the mobile device 104 is oriented toward a north-west direction with respect to reference axes 107 of the floor 102. For example, as shown in FIG. 1, the orientation axis 106 (e.g., the direction toward which the mobile device 104 is pointed) is oriented toward the north-west direction with respect to the reference axes 107.

In an aspect, floor 102 may include two or more orientation indicators (also referred to as "indicators" or "luminaires") located above the mobile device 104. In the configuration of FIG. 1, floor 102 includes indicators 108, 110, 112, 114, 116, 118, 120, and 122. It should be understood that floor 102 may include a lesser or greater number of indicators than those indicated in FIG. 1. In an aspect, each of the indicators may be a light fixture or a luminaire and may be configured to communicate information for identifying a corresponding indicator. For example, such light fixture or luminaire may include a light emitting diode (LED) as the light producing element. In another example, each of the indicators may be a visual indicator, such as a QR Code® (also referred to as a quick response code) or a color panel, or may include a unique visual characteristic, such as a distinct shape (e.g., a square shape, a triangular shape, a star shape, etc.). In one configuration, the indicators may each be installed on a ceiling of the floor 102, such that the indicators are visible from the ground of the floor 102. As described *infra,* the mobile device 104 may be configured to use two or more of the indicators to determine the orientation axis 106 of the mobile device 104 with respect to the reference axes 107.

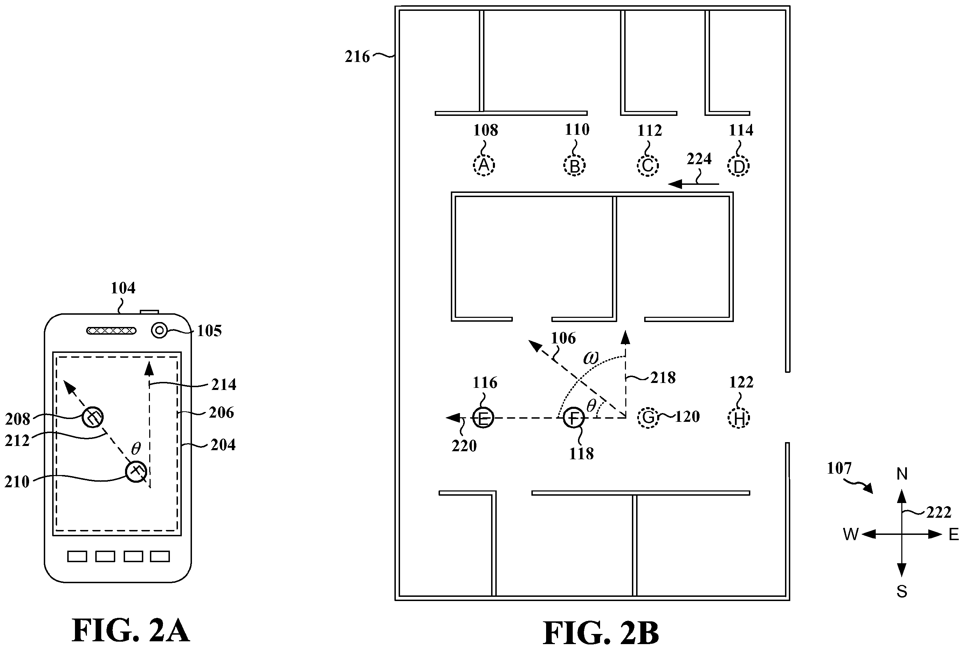

FIG. 2A is a diagram illustrating the mobile device 104. As shown in FIG. 2A, the mobile device 104 includes a front facing camera 105 and a display screen 204. In an aspect, the front facing camera 105 may capture images via a digital image sensor (e.g., a CMOS sensor) installed in the front facing camera 105. The mobile device 104 may display images captured by the front facing camera 105 on the display screen 204.

With reference to FIG. 1, the mobile device 104 may operate the front facing camera 105 to capture one or more images of two or more indicators (e.g., indicators 108, 110, 112, 114, 116, 118, 120, and 122). The mobile device 104 may further operate the front facing camera 105 to receive identifying information from two or more of the indicators (e.g., indicators 108, 110, 112, 114, 116, 118, 120, and 122) located above the mobile device 104 and within a field of view of the front facing camera 105. In one aspect, and as discussed *infra,* the front facing camera 105 may detect identifying information from one or more of the indicators in FIG. 1 without receiving any identifying information from the one or more indicators.

In an aspect, the indicators (e.g., indicators 108, 110, 112, 114, 116, 118, 120, and 122) may be LED devices configured to transmit visible light communication (VLC) signals. The VLC signals may be detected by the front facing camera 105 and the digital image sensor of the mobile device 104. The VLC signals may then be decoded by the mobile device 104. In such aspect, the VLC signals transmitted by an indicator may contain identification information of the indicator. The mobile device 104 may associate the indicator with the identification information transmitted by the indicator. For example, the identification information transmitted by an indicator may be a 48 bit MAC address that is unique with respect to other indicators. It should be understood that other types of identification information may be transmitted by the indicators if such identification information is unique and allows for disambiguation of an indicator located in a particular venue (e.g., a floor of an office building, supermarket, or shopping mall). In an aspect, the mobile device 104 may be configured to simultaneously decode VLC signals from multiple indicators.

For example, the front facing camera 105 may detect and decode first VLC signals transmitted by indicator E 116 and second VLC signals transmitted by indicator F 118. The mobile device 104 may decode the first VLC signals transmitted by indicator E 116 in order to determine the identifying information included in the first VLC signals and to identify the indicator E 116. The mobile device 104 may decode the second VLC signals transmitted by indicator F 118 in order to determine the identifying information included in the second VLC signals and to identify the indicator F 118. In this example, the mobile device 104 may identify the indicator E 116 based on a first 48 bit MAC address received from the indicator E 116 via the first VLC signals, where the first 48 bit MAC address identifies or corresponds to the indicator E 116. The mobile device 104 may identify the indicator F 118 based on a second 48 bit MAC address received from the indicator F 118 via the second VLC signals, where the second 48 bit MAC address identifies or corresponds to the indicator F 118.

In an aspect, one or more of the indicators (e.g., indicators 108, 110, 112, 114, 116, 118, 120, and 122) may not transmit any information. In such aspect, information may be embedded in the shape, color, and or visual structure of the indicator which may be detected and interpreted by the digital image sensor (e.g., a CMOS sensor) installed in the front facing camera 105.

In an aspect, after the mobile device 104 has identified two or more indicators, the mobile device 104 may reference a map of the venue in which the mobile device 104 is currently located. In one configuration, the map of the venue may include the locations of two or more of the indicators (e.g., indicators 108, 110, 112, 114, 116, 118, 120, and 122) located at the venue.

In an aspect, the map 216 may be stored in a memory of the mobile device 104. In another aspect, the map 216 may be stored on a remote server (not shown). In such aspect, the mobile device 104 may query the remote server for orientation information. For example, the mobile device 104 may send information regarding the identified indicators 116 and 118 to the remote server (also referred to as a network) along with the query. In one configuration, the remote server may respond with the orientation of the mobile device 104. In an aspect, the map 216 may be downloaded to the mobile device 104 using an out-of-band (RF) signal from a wireless local area network (WLAN), a wide area network (WAN), or other network. For example, such downloading of the map 216 may be triggered automatically by the mobile device 104 when mobile device 104 determines that it has entered an indoor venue. For example, the mobile device 104 may determine that it has entered an indoor venue using contextual information or by employing a positioning system that uses a combination of GPS and terrestrial RF technologies.

For example, with reference to FIG. 2B, the mobile device 104 may reference a map 216 of the floor 102. In such example, the mobile device 104 may determine the locations of the identified indicators (e.g., indicator E 116 and indicator F 118) on the map 216 and may determine the orientation of the identified indicators with respect to the reference axes 107. The mobile device 104 may then determine its own orientation axis 106 with respect to the reference axes 107.

An example orientation determination operation of the mobile device 104 will now be described with reference to FIGS. 1, 2A and 2B. As previously described with respect to FIG. 1, the mobile device 104 may capture one or more images of the indicators 116 and 118 via the front facing camera 105, such as the image 206 shown in FIG. 2A. The mobile device 104 identifies the indicators 116 and 118. In an aspect, the mobile device 104 may receive identifying information from each the indicators 116 and 118 via the front facing camera 105 and may identify the indicators 116 and 118 based on the received identifying information. It should be noted that the mobile device 104 captures the image 206 of the indicators 116 and 118 while oriented according to the orientation axis (e.g., orientation axis 106) to be determined by the mobile device 104. The mobile device identifies the locations of indicators 116 and 118 in the captured image 206 on the map 216. The map 216 may be stored in a memory of the mobile device 104 or received from a remote server.

As shown in FIG. 2B, the mobile device 104 may draw a vector 220 on the map 216 connecting the identified indicators 116 and 118. In an aspect, the vector 220 may be drawn to pass through the center of indicator E 116 and the center of indicator F 118 as shown in FIG. 2B. The vector 220 may be referred to as the indicator axis. The mobile device 104 may determine the angle of the indicator axis (e.g., vector 220) relative to a reference axis, such as the north axis 222 of the reference axes 107. For ease of description, the north axis 222 is shown in FIG. 2B as vector 218. The angle *ω* of the indicator axis (e.g., vector 220) relative to the reference axis (e.g., vector 218) represents the orientation of the indicator axis (e.g., vector 220).

The mobile device 104 may draw a vector 212 on the image 206 captured by the front facing camera 105. In an aspect, the vector 212 may be drawn to pass through the center of the set of pixels identified as indicator E 208 and the center of the set of pixels identified as indicator F 210 as shown in FIG. 2A. The vector 212 may be referred to as the image indicator axis. The mobile device 104 may determine the angle of the image indicator axis (e.g., vector 212) relative to a fixed axis (also referred to as a screen axis) (e.g., vector 214), which is defined as the axis extending from the bottom of the screen 204 to the top of the screen 204. The angle *θ* of the image indicator axis (e.g., vector 212) relative to the screen axis (e.g., vector 214) represents the orientation of the image indicator axis (e.g., vector 212) relative to the screen axis (e.g., vector 214). The negative of the angle *θ* represents the orientation axis (e.g., vector 106) of the mobile device 104 relative to the indicator axis (e.g., vector 220). Therefore, the orientation axis (e.g., vector 106) of the mobile device 104 relative to the reference axis (e.g., the north axis 222 represented as vector 218 in FIG. 2B) may be determined by summing the angle *ω* and the angle -*θ*. For example, with reference to FIG. 2B, the mobile device 104 may determine the sum of the angle *ω* and the angle -*θ*, where the sum represents the angle of the orientation axis (e.g., vector 106) of the mobile device 104 with respect to the reference axis (e.g., vector 218).

In the previously described aspect where the mobile device 104 queries the remote server for orientation information, the mobile device 104 may transmit a query that includes the identities of the indicators 116 and 118 and one or more of the captured images of the indicators 116 and 118 to the remote server. The remote server may then determine the orientation of the mobile device 104 using the identities of the indicators 116 and 118 and the one or more captured images of the indicators 116 and 118. The remote server may then transmit information regarding the orientation of the mobile device 104. The mobile device 104 may receive the information regarding the orientation of the mobile device 104 and may determine its orientation using the received information. For example, the information regarding the orientation of the mobile device 104 received from the remote server may indicate the orientation of the mobile device 104 with respect to a reference axis (e.g., the north axis 222 represented as vector 218 in FIG. 2B). For example, with reference to FIG. 2B, the orientation of the mobile device 104 with respect to the reference axis may be represented as the sum of angle *ω* and the angle -*θ*.

It should be understood that the reference axis may be selected to be an axis different from the north axis 222. In an aspect, the reference axis may be any fixed reference axis, such as a magnetic/geographic north axis or south axis, where the reference axis is stored in the map. In another aspect, the reference axis may be determined relative to a reference axis contained in the map. For example, the reference axis may be an axis corresponding to a hallway 224 on the map 216. As another example, the reference axis may be a particular aisle in a supermarket.

It should also be understood that the disclosure herein may be applied to a configuration where the indicators (e.g., indicators 108, 110, 112, 114, 116, 118, 120, and 122) are installed on the ground of the floor 102 (i.e., below the mobile device 104) and where the mobile device 104 uses a rear camera (not shown) to receive information for identifying two or more of the indicators and for capturing one or more images of the indicators.

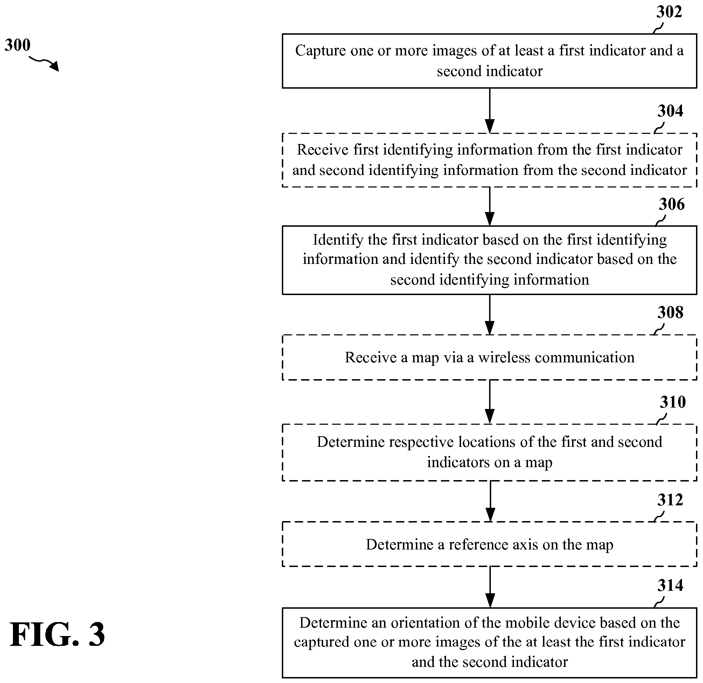

FIG. 3 is a flow chart 300 of a method for a mobile device. For example, the method may be performed by the mobile device 104.

At step 302, the mobile device captures one or more images of at least a first indicator and a second indicator. For example, with reference to FIG. 1, the mobile device 104 may operate the front facing camera 105 to capture one or more images of two or more indicators (e.g., indicator E 116 and indicator F 118).

At step 304, the mobile device receives first identifying information from the first indicator and receives second identifying information from the second indicator. In an aspect, the first and second indicators may be LEDs configured to communicate the identifying information. For example, with reference to FIG. 1, the mobile device 104 may operate the front facing camera 105 to receive identifying information from each of two or more of the indicators (e.g., indicators 108, 110, 112, 114, 116, 118, 120, and 122) located above the mobile device 104 and within a field of view of the front facing camera 105. In an aspect, each indicator may be an LED device configured to transmit a VLC signal that contains identification information of the indicator. For example, the identification information transmitted by an indicator may be a 48 bit MAC address that is unique with respect to other indicators.

At step 306, the mobile device identifies the first indicator based on the first identifying information and identifies the second indicator based on the second identifying information. In one example, with reference to FIG. 1, the mobile device 104 may identify the indicator E 116 based on a first 48 bit MAC address received from the indicator E 116, where the first 48 bit MAC address identifies or corresponds to the indicator E 116. In such example, the mobile device 104 may further identify the indicator F 118 based on a second 48 bit MAC address received from the indicator F 118, where the second 48 bit MAC address identifies or corresponds to the indicator F 118. In another example, with reference to FIG. 1, the mobile device 104 may identify the indicator E 116 based on first identifying information of the indicator E 116 that may be detected by the digital image sensor (e.g., a CMOS sensor) of the front facing camera 105. For example, the first identifying information may be a unique QR code®, a color panel, or a unique visual characteristic, such as a distinct shape. In such example, the mobile device 104 may identify the indicator F 118 based on second identifying information of the indicator F 118 that may be detected by the digital image sensor (e.g., a CMOS sensor) of the front facing camera 105. For example, the second identifying information may be a unique QR code®, a color panel, or a unique visual characteristic, such as a distinct shape.

At step 308, the mobile device receives the map via a wireless communication. In an aspect, the map is automatically received when the mobile device is located indoors. For example, with reference to FIG. 2B, the mobile device 104 may receive a map 216 of the indoor venue (e.g., floor 102) shown in FIG. 1. In an aspect, and as shown in FIG. 2B, the map 216 may indicate the locations of the indicators (e.g., indicators 108, 110, 112, 114, 116, 118, 120, and 122) located in the indoor venue.

At step 310, the mobile device determines respective locations of the first and second indicators on a map. For example, with reference to FIG. 2B, the mobile device 104 may determine the locations of indicator E 116 and indicator F 118 on the map 216.

At step 312, the mobile device determines a reference axis on the map. For example, with reference to FIG. 2B, the mobile device 104 may determine the north axis 222 of the reference axes 107 as the reference axis. In an aspect, the reference axis may be indicated in the map 216.

At step 314, the mobile device determines an orientation of the mobile device based on the captured one or more images of the at least the first indicator and the second indicator. In an aspect, the orientation of the mobile device is determined relative to the reference axis. For example, as shown in FIG. 2B, the mobile device 104 may draw the indicator axis (e.g., vector 220) on the map 216 connecting the identified indicators 116 and 118. The mobile device 104 may determine the angle of the indicator axis (e.g., vector 220) relative to a reference axis (e.g., vector 218). The angle *ω* of the indicator axis (e.g., vector 220) relative to the reference axis (e.g., vector 218) represents the orientation of the indicator axis (e.g., vector 220).

The mobile device 104 may draw the image indicator axis (e.g., vector 212) on the image 206 captured by the front facing camera 105. The mobile device 104 may determine the angle of the image indicator axis (e.g., vector 212) relative to the screen axis (e.g., vector 214), which is defined as the axis extending from the bottom of the screen 212 to the top of the screen 212. The angle *θ* of the image indicator axis (e.g., vector 212) relative to the screen axis (e.g., vector 214) represents the orientation of the image indicator axis (e.g., vector 212) relative to the screen axis (e.g., vector 214). The negative of the angle *θ* represents the orientation axis (e.g., vector 106) of the mobile device 104 relative to the indicator axis (e.g., vector 220). Therefore, the orientation axis (e.g., vector 106) of the mobile device 104 relative to the reference axis (e.g., the north axis 222 represented as vector 218 in FIG. 2B) may be determined by summing the angle *ω* and the angle -*θ*. For example, with reference to FIG. 2B, the mobile device 104 may determine the sum of the angle *ω* and the angle -*θ*, where the sum represents the angle of the orientation axis (e.g., vector 106) of the mobile device 104 with respect to the reference axis (e.g., vector 218).

It should be understood that the steps 304, 308, 310, and 312 indicated with dotted lines in FIG. 3 represent optional steps. For example, in one embodiment, steps 302, 306, and 314 may be performed without performing steps 304, 308, 310, and 312. It should be further understood that various combinations of the steps 304, 308, 310, and 312 may be performed in accordance with various embodiments. For example, in one embodiment, steps 302, 304, 306, and 314 may be performed without performing steps 308, 310, and 312.

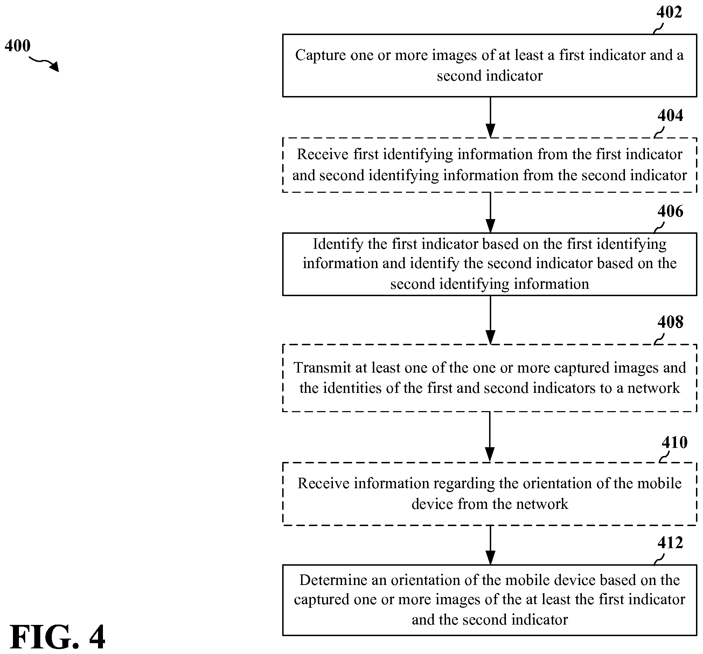

FIG. 4 is a flow chart 400 of a method for a mobile device. For example, the method may be performed by the mobile device 104.

At step 402, the mobile device captures one or more images of at least the first indicator and the second indicator. For example, with reference to FIG. 1, the mobile device 104 may operate the front facing camera 105 to capture one or more images of two or more indicators (e.g., indicator E 116 and indicator F 118).

At step 404, the mobile device receives first identifying information from the first indicator and receives second identifying information from the second indicator. In an aspect, each of the first and second indicators may be an LED configured to communicate the identifying information. For example, with reference to FIG. 1, the mobile device 104 may operate the front facing camera 105 to receive identifying information from two or more of the indicators (e.g., indicators 108, 110, 112, 114, 116, 118, 120, and 122) located above the mobile device 104 and within a field of view of the front facing camera 105. In an aspect, each indicator may be an LED device configured to transmit a VLC signal that contains identification information of the indicator. For example, the identification information transmitted by an indicator may be a 48 bit MAC address that is unique with respect to other indicators.

At step 406, the mobile device identifies the first indicator based on the first identifying information and identifies the second indicator based on the second identifying information. In one example, with reference to FIG. 1, the mobile device 104 may identify the indicator E 116 based on a first 48 bit MAC address received from the indicator E 116, where the first 48 bit MAC address identifies or corresponds to the indicator E 116. In such example, the mobile device 104 may identify the indicator F 118 based on a second 48 bit MAC address received from the indicator F 118, where the second 48 bit MAC address identifies or corresponds to the indicator F 118. In another example, with reference to FIG. 1, the mobile device 104 may identify the indicator E 116 based on first identifying information of the indicator E 116 that may be detected by the digital image sensor (e.g., a CMOS sensor) of the front facing camera 105. For example, the first identifying information may be a unique QR code®, a color panel, or a unique visual characteristic, such as a distinct shape. In such example, the mobile device 104 may identify the indicator F 118 based on second identifying information of the indicator F 118 that may be detected by the digital image sensor (e.g., a CMOS sensor) of the front facing camera 105. For example, the second identifying information may be a unique QR code®, a color panel, or a unique visual characteristic, such as a distinct shape.

At step 408, the mobile device transmits at least one of the one or more captured images and the identities of the first and second indicators to a network.

At step 410, the mobile device receives information regarding the orientation of the mobile device from the network.

At step 412, the mobile device determines an orientation of the mobile device based on the captured one or more images of the at least the first indicator and the second indicator. In an aspect, determination of the orientation of the mobile device is further based on the received information regarding the orientation of the mobile device. For example, the information regarding the orientation of the mobile device received from the network may indicate the orientation of the mobile device 104 with respect to a reference axis (e.g., the north axis 222 represented as vector 218 in FIG. 2B). For example, with reference to FIG. 2B, the orientation of the mobile device 104 with respect to a reference axis may be represented as the sum of angle *ω* and the angle -*θ*.

It should be understood that the steps 404, 408, and 410 indicated with dotted lines in FIG. 4 represent optional steps. For example, in one embodiment, steps 402, 406, and 412 may be performed without performing steps 404, 408, and 410. It should be further understood that various combinations of the steps 404, 408, and 410 may be performed in accordance with various embodiments. For example, in one embodiment, steps 402, 404, 406, and 412 may be performed without performing steps 408 and 410.

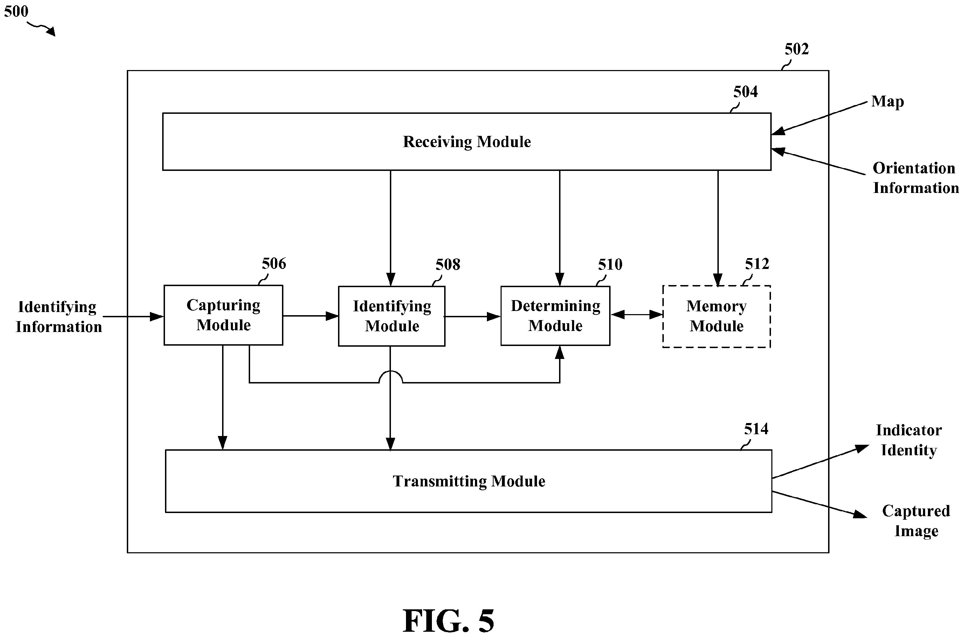

FIG. 5 is a conceptual data flow diagram 500 illustrating the data flow between different modules/means/components in an exemplary apparatus 502. The apparatus may be a mobile device, such as the mobile device 104. The apparatus includes a module 504 that receives information regarding the orientation of the apparatus from the network and that receives a map via a wireless communication, a module 506 that receives first identifying information from a first indicator and second identifying information from a second indicator, and that captures one or more images of at least the first indicator and the second indicator, a module 508 that identifies the first indicator based on the first identifying information and the second indicator based on the second identifying information, a module 510 that determines an orientation of the apparatus based on the captured one or more images of the at least the first indicator and the second indicator, determines respective locations of the first and second indicators on a map, and determines a reference axis on the map, a module 512 that stores a map, and a module 514 that transmits at least one of the one or more captured images and the identities of the first and second indicators to a network.

The apparatus may include additional modules that perform each of the steps of the algorithm in the aforementioned flow charts of FIGS. 3 and 4. As such, each step in the aforementioned flow charts of FIGS. 3 and 4 may be performed by a module and the apparatus may include one or more of those modules. The modules may be one or more hardware components specifically configured to carry out the stated processes/algorithm, implemented by a processor configured to perform the stated processes/algorithm, stored within a computer-readable medium for implementation by a processor, or some combination thereof.

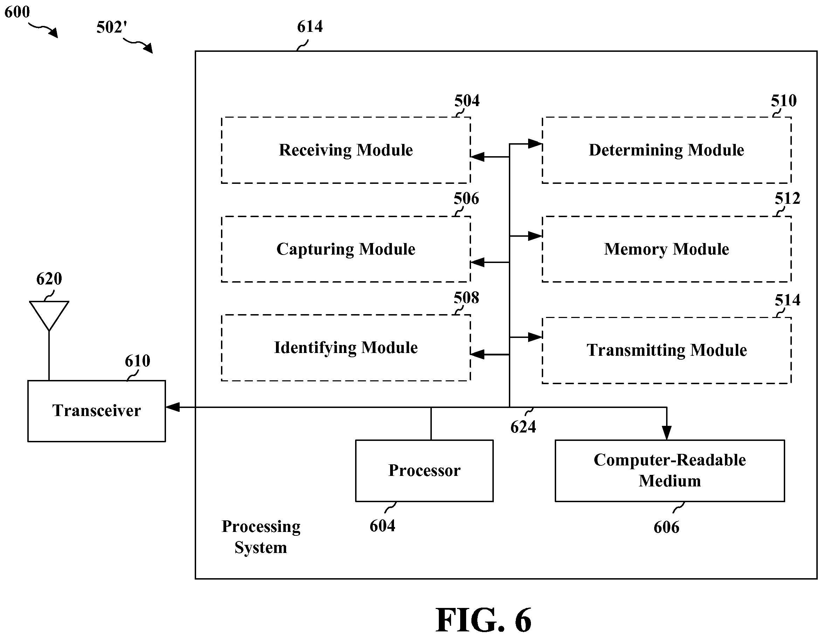

FIG. 6 is a diagram 600 illustrating an example of a hardware implementation for an apparatus 502' employing a processing system 614. The processing system 614 may be implemented with a bus architecture, represented generally by the bus 624. The bus 624 may include any number of interconnecting buses and bridges depending on the specific application of the processing system 614 and the overall design constraints. The bus 624 links together various circuits including one or more processors and/or hardware modules, represented by the processor 604, the modules 504, 506, 508, 510, 512, and 514, and the computer-readable medium 606. The bus 624 may also link various other circuits such as timing sources, peripherals, voltage regulators, and power management circuits, which are well known in the art, and therefore, will not be described any further.

The processing system 614 may be coupled to a transceiver 610. The transceiver 610 is coupled to one or more antennas 620. The transceiver 610 provides a means for communicating with various other apparatus over a transmission medium. The transceiver 610 receives a signal from the one or more antennas 620, extracts information from the received signal, and provides the extracted information to the processing system 614, specifically the receiving module 504. In addition, the transceiver 610 receives information from the processing system 614, specifically the transmission module 514, and based on the received information, generates a signal to be applied to the one or more antennas 620. The processing system 614 includes a processor 604 coupled to a computer-readable medium 606. The processor 604 is responsible for general processing, including the execution of software stored on the computer-readable medium 606. The software, when executed by the processor 604, causes the processing system 614 to perform the various functions described supra for any particular apparatus. The computer-readable medium 606 may also be used for storing data that is manipulated by the processor 604 when executing software. The processing system further includes at least one of the modules 504, 506, 508, 510, 512, and 514. The modules may be software modules running in the processor 604, resident/stored in the computer readable medium 606, one or more hardware modules coupled to the processor 604, or some combination thereof.

In one configuration, the apparatus 502/502' for wireless communication includes means for capturing one or more images of at least a first indicator and a second indicator, means for identifying the first indicator based on first identifying information and identifying the second indicator based on second identifying information, means for determining an orientation of the apparatus based on the captured one or more images of the at least a first indicator and a second indicator, means for receiving the first identifying information from the first indicator and the second identifying information from the second indicator, means for determining respective locations of the first and second indicators on a map, means for determining a reference axis on the map, means for transmitting at least one of the one or more captured images and the identities of the first and second indicators to a network, means for receiving information regarding the orientation of the apparatus from the network, and means for receiving the map via a wireless communication. The aforementioned means may be one or more of the aforementioned modules of the apparatus 502 and/or the processing system 614 of the apparatus 502' configured to perform the functions recited by the aforementioned means.

## Claims

1. A method (300) for determining an orientation of a mobile device (104) in an indoor venue, the method comprising:
capturing (302), on a screen of the mobile device, one or more images of at least a first indicator (118, 116) and a second indicator (116,118), positioned in the indoor venue;
identifying (306) the first indicator (118, 116) based on first identifying information and identifying the second indicator (116, 118) based on second identifying information;
determining (310) respective locations of the first and second indicators on a map (216) of the indoor venue, **characterized by**:
referencing (312) the map (216) of the indoor venue with respect to the identified first indicator (118, 116) and the identified second indicator (116, 118) to determine a first axis (220) associated with the identified first indicator (118, 116) and the identified second indicator (116, 118) on the map (216) of the indoor venue, wherein the first and second indicators are situated along the first axis (220) on the map of the indoor venue (216), the first axis (220) forming a first angle, ω, relative to a reference axis (218) of the map of the indoor venue; and
determining (314) an orientation of the mobile device, by:
determining a second axis (212) on which the first and second indicators are situated in one of the captured one or more images;
determining a second angle, θ, formed by the second axis (212) relative to a fixed axis (214) of the mobile device (104), said fixed axis extending from a bottom to a top of the screen of the mobile device; and
summing the first and second angles to determine the orientation of the mobile device in the indoor venue.

2. The method of claim 1, further comprising receiving the first identifying information from the first indicator and the second identifying information from the second indicator.

3. The method of claim 1, further comprising:
transmitting at least one of the one or more captured images and the identities of the first and second indicators to a network; and
receiving information regarding the orientation of the mobile device from the network,
wherein determining the orientation of the mobile device is further based on the received information regarding the orientation of the mobile device.

4. The method of claim 1, wherein each of the first and second indicators comprises a light emitting diode, LED, configured to communicate the identifying information.

5. The method of claim 1, wherein the first and second identifying information each comprise a QR code or a unique visual characteristic

6. The method of claim 5, wherein the unique visual characteristic comprises a color or a shape.

7. The method of claim 1, further comprising receiving the map via a wireless communication.

8. The method of claim 7, wherein the map is automatically received when the mobile device is located indoors.

9. An apparatus (500) for wireless communication, comprising:
means (506) for capturing, on a screen of the apparatus, one or more images of at least a first indicator (118,116) and a second indicator (116, 118), positioned in an indoor venue;
means (508) for identifying the first indicator (118, 116) based on first identifying information and identifying the second indicator (116, 118) based on second identifying information;
means for determining respective locations of the first and second indicators on a map of the indoor venue (216), **characterized by**:
means (510) for referencing the map (216) of the indoor venue with respect to the identified first indicator (118, 116) and the identified second indicator (116, 118) to determine a first axis (220) associated with the identified first indicator (118, 116) and the identified second indicator (116, 118) on the map (216) of the indoor venue, wherein the first and second indicators are situated along the first axis (220) on the map (216) of the indoor venue, the first axis (220) forming a first angle, ω, relative to a reference axis (218) of the map of the indoor venue; and
means (510) for determining an orientation of the apparatus, by:
means for determining a second axis (212) on which the first and second indicators are situated in one of the captured one or more images;
means for determining a second angle, θ, formed by the second axis (212) relative to a fixed axis (214) of the mobile device (104), said fixed axis extending from a bottom to a top of the screen of the mobile device; and
means for summing the first and second angles to determine the orientation of the mobile device in the indoor venue.

10. The apparatus of claim 9, further comprising means for receiving the first identifying information from the first indicator and the second identifying information from the second indicator.

11. The apparatus of claim 9, further comprising:
means for transmitting at least one of the one or more captured images and the identities of the first and second indicators to a network; and
means for receiving information regarding the orientation of the apparatus from the network,
wherein determining the orientation of the apparatus is further based on the received information regarding the orientation of the apparatus.

12. The apparatus of claim 9, wherein each of the first and second indicators comprises a light emitting diode, LED, configured to communicate the identifying information.

13. The apparatus of claim 9, wherein the first and second identifying information each comprise a QR code or a unique visual characteristic.

14. The apparatus of claim 13, wherein the unique visual characteristic comprises a color or a shape.

15. A computer-readable medium (606) storing computer executable code for determining an orientation of a mobile device in an indoor venue, the computer-readable medium comprising code for:
capturing (302), on a screen of the mobile device, one or more images of at least a first indicator (118, 116) and a second indicator (116, 118), positioned in the indoor venue;
identifying (306) the first indicator (118, 116) based on first identifying information and identifying the second indicator (116, 118) based on second identifying information;
determining (310) respective locations of the first and second indicators on a map (216) of the indoor venue, **characterized by**:
referencing (312) the map (216) of the indoor venue with respect to the identified first indicator (118, 116) and the identified second indicator (116, 118) to determine a first axis (220) associated with the identified first indicator (118, 116) and the identified second indicator (116, 118) on the map (216) of the indoor venue, wherein the first and second indicators are situated along the first axis (220) on the map of the indoor venue, the first axis (220) forming a first angle, ω, relative to a reference axis (218) of the map of the indoor venue; and
determining (314) an orientation of a mobile device, by:
determining a second axis (212) on which the first and second indicators are situated in one of the captured one or more images;
determining a second angle, θ, formed by the second axis (212) relative to a fixed axis (214) of the mobile device (104), said fixed axis extending from a bottom to a top of the screen of the mobile device; and
summing the first and second angles to determine the orientation of the mobile device in the indoor venue.

## Patentansprüche

1. Ein Verfahren (300) zum Bestimmen einer Ausrichtung einer Mobileinrichtung (104) in einer Indoor- bzw. Innenraumörtlichkeit, wobei das Verfahren Folgendes aufweist:
Erfassen (302), auf einem Bildschirm einer Mobileinrichtung, von einem oder mehreren Bildern wenigstens eines ersten Indikators (118, 116) und eines zweiten Indikators (116, 118), die in der Indoor-Örtlichkeit positioniert sind;
Identifizieren (306) des ersten Indikators (118, 116) basierend auf erster identifizierenden Information und Identifizieren des zweiten Indikators (116, 118) basierend auf zweiter identifizierender Information;
Bestimmen (310) jeweiliger Standorte des ersten und zweiten Indikators auf einer Karte (216) der Indoor-Örtlichkeit, **gekennzeichnet durch**:
Bezugnehmen (312) auf die Karte (216) der Indoor-Örtlichkeit in Bezug auf den identifizierten ersten Indikator (118, 116) und den identifizierten zweiten Indikator (116, 118) zum Bestimmen einer ersten Achse (220), die mit dem identifizierten ersten Indikator (118, 116) und dem identifizierten zweiten Indikator (116, 118) auf der Karte (216) der Indoor-Örtlichkeit assoziiert ist, wobei der erste und zweite Indikator entlang der ersten Achse (220) auf der Karte der Indoor-Örtlichkeit (216) positioniert sind, wobei die erste Achse (220) einen ersten Winkel ω relativ zu einer Referenzachse (218) der Karte der Indoor-Örtlichkeit bildet; und
Bestimmen (314) einer Ausrichtung der Mobileinrichtung **durch**:
Bestimmen einer zweiten Achse (212), auf der der erste und zweite Indikator in einem der erfassten einen oder mehreren Bilder positioniert sind;
Bestimmen eines zweiten Winkels θ, der **durch** die zweite Achse (212) relativ zu einer fixen Achse (214) der Mobileinrichtung (104) gebildet wird, wobei sich die fixe Achse von einem unteren Ende zu einem oberen Ende des Bildschirms der Mobileinrichtung erstreckt; und
Summieren der ersten und zweiten Winkel zum Bestimmen der Ausrichtung der Mobileinrichtung in der Indoor-Örtlichkeit.

2. Verfahren nach Anspruch 1, das weiter Empfangen der ersten identifizierenden Information von dem ersten Indikator und der zweiten identifizierenden Information von dem zweiten Indikator aufweist.

3. Verfahren nach Anspruch 1, das weiter Folgendes aufweist:
Senden von wenigstens einem von dem einen oder den mehreren erfassten Bildern und der Identitäten der ersten und zweiten Indikatoren an ein Netzwerk; und
Empfangen von Information bezüglich der Ausrichtung der Mobileinrichtung von dem Netzwerk,
wobei das Bestimmen der Ausrichtung der Mobileinrichtung weiter auf der empfangenen Information bezüglich der Ausrichtung der Mobileinrichtung basiert.

4. Verfahren nach Anspruch 1, wobei jeder von dem ersten und zweiten Indikator eine Licht emittierende Diode bzw. LED (LED = light emitting diode) aufweist, die zum Kommunizieren der identifizierenden Information konfiguriert ist.

5. Verfahren nach Anspruch 1, wobei die erste und zweite identifizierende Information jeweils einen QR-Code oder eine eindeutige visuelle Charakteristik aufweist.

6. Verfahren nach Anspruch 5, wobei die eindeutige visuelle Charakteristik eine Farbe oder eine Form aufweist.

7. Verfahren nach Anspruch 1, das weiter Empfangen der Karte über eine Drahtloskommunikation aufweist.

8. Verfahren nach Anspruch 7, wobei die Karte automatisch empfangen wird, wenn die Mobileinrichtung im Innenraum angeordnet ist.

9. Eine Vorrichtung (500) für Drahtloskommunikation, die Folgendes aufweist:
Mittel (506) zum Erfassen, auf einem Bildschirm der Vorrichtung, von einem oder mehreren Bildern von wenigstens einem ersten Indikator (118, 116) und einem zweiten Indikator (116, 118), die in einer Indoor- bzw. Innenraum-Örtlichkeit positioniert sind;
Mittel (508) zum Identifizieren des ersten Indikators (118, 116) basierend auf erster identifizierender Information und Identifizieren des zweiten Indikators (116, 118) basierend auf zweiter identifizierender Information;
Mittel zum Bestimmen jeweiliger Standorte des ersten und zweiten Indikators auf einer Karte der Indoor-Örtlichkeit (216), **gekennzeichnet durch**:
Mittel (510) zum Bezugnehmen auf die Karte (216) der Indoor-Örtlichkeit in Bezug auf den identifizierten ersten Indikator (118, 116) und den identifizierten zweiten Indikator (116, 118) zum Bestimmen einer ersten Achse (220), die mit dem identifizierten ersten Indikator (118, 116) und dem identifizierten zweiten Indikator (116, 118) auf der Karte (216) der Indoor-Örtlichkeit assoziiert ist, wobei der erste und zweite Indikator entlang der ersten Achse (220) auf der Karte (216) der Indoor-Örtlichkeit positioniert sind, wobei die erste Achse (220) einen ersten Winkel ω relativ zu einer Referenzachse (218) der Karte der Indoor-Örtlichkeit bildet; und
Mittel (510) zum Bestimmen einer Ausrichtung der Mobileinrichtung **durch**:
Mittel zum Bestimmen einer zweiten Achse (212), auf der der erste und zweite Indikator in einem der erfassten ein oder mehreren Bilder positioniert sind;
Mittel zum Bestimmen eines zweiten Winkels θ, der **durch** die zweite Achse (212) relativ zu einer fixen Achse (214) der Mobileinrichtung (104) gebildet wird, wobei sich die fixe Achse von einem unteren Ende zu einem oberen Ende des Bildschirms der Mobileinrichtung erstreckt; und
Mittel zum Summieren der ersten und zweiten Winkel zum Bestimmen der Ausrichtung der Mobileinrichtung in der Indoor-Örtlichkeit.

10. Vorrichtung nach Anspruch 9, die weiter Mittel aufweist zum Empfangen der ersten identifizierenden Information von dem ersten Indikator und der zweiten identifizierenden Information von dem zweiten Indikator.

11. Vorrichtung nach Anspruch 9, die weiter Folgendes aufweist:
Mittel zum Senden von wenigstens einem der ein oder mehreren erfassten Bilder und der Identitäten von dem ersten und zweiten Indikator an ein Netzwerk; und
Mittel zum Empfangen von Information bezüglich der Ausrichtung der Vorrichtung von dem Netzwerk,
wobei das Bestimmen der Ausrichtung der Vorrichtung weiter auf der empfangenen Information bezüglich der Ausrichtung der Vorrichtung basiert.

12. Vorrichtung nach Anspruch 9, wobei jeder von dem ersten und zweiten Indikator eine Licht emittierende Diode bzw. LED (LED = light emitting diode) aufweist, die konfiguriert ist zum Kommunizieren der identifizierenden Information.

13. Vorrichtung nach Anspruch 9, wobei die erste und zweite identifizierende Information jeweils einen QR-Code oder eine eindeutige visuelle Charakteristik aufweisen.

14. Vorrichtung nach Anspruch 13, wobei die eindeutige visuelle Charakteristik eine Farbe oder eine Form aufweist.

15. Ein computerlesbares Medium (606), das von einem Computer ausführbaren Code speichert zum Bestimmen einer Ausrichtung einer Mobileinrichtung in einer Indoor- bzw. Innenraum-Örtlichkeit, wobei das computerlesbare Medium Code aufweist zum:
Erfassen (302), auf einem Bildschirm der Mobileinrichtung, von einem oder mehreren Bildern wenigstens eines ersten Indikators (118, 116) und eines zweiten Indikators (116, 118), die in der Indoor-Örtlichkeit positioniert sind;
Identifizieren (306) des ersten Indikators (118, 116) basierend auf erster identifizierender Information und Identifizieren des zweiten Indikators (116, 118) basierend auf zweiter identifizierender Information;
Bestimmen (310) jeweiliger Standorte des ersten und zweiten Indikators auf einer Karte (216) der Indoor-Örtlichkeit, **gekennzeichnet durch**:
Bezugnehmen (312) auf die Karte (216) der Indoor-Örtlichkeit in Bezug auf den identifizierten ersten Indikator (118, 116) und den identifizierten zweiten Indikator (116, 118) zum Bestimmen einer ersten Achse (220), die mit dem identifizierten ersten Indikator (118, 116) und dem identifizierten zweiten Indikator (116, 118) auf der Karte (216) der Indoor-Örtlichkeit assoziiert ist, wobei der erste und zweite Indikator entlang der ersten Achse (220) auf der Karte der Indoor-Örtlichkeit positioniert sind, wobei die erste Achse (220) einen ersten Winkel ω relativ zu einer Referenzachse (218) der Karte der Indoor-Örtlichkeit bildet; und
Bestimmen (314) einer Ausrichtung einer Mobileinrichtung **durch**:
Bestimmen einer zweiten Achse (212), auf der der erste und zweite Indikator in einem der erfassten ein oder mehreren Bilder positioniert sind;
Bestimmen eines zweiten Winkels θ, der **durch** die zweite Achse (212) relativ zu einer fixen Achse (214) der Mobileinrichtung (104) gebildet wird, wobei sich die fixe Achse von einem unteren Ende zu einem oberen Ende des Bildschirms der Mobileinrichtung erstreckt; und
Summieren der ersten und zweiten Winkel zum Bestimmen der Ausrichtung der Mobileinrichtung in der Indoor-Örtlichkeit.

## Revendications

1. Procédé (300) de détermination d'une orientation d'un dispositif mobile (104) dans un endroit fermé, le procédé comprenant :
une capture (302), sur un écran du dispositif mobile, d'une ou de plusieurs images d'au moins un premier indicateur (118, 116) et un second indicateur (116, 118), positionnés dans l'endroit fermé ;
une identification (306) du premier indicateur (118, 116) sur la base de premières informations d'identification et une identification du second indicateur (116, 118) sur la base de secondes informations d'identification ;
une détermination (310) d'emplacements respectifs des premier et second indicateurs sur une carte (216) de l'endroit fermé, **caractérisé par** :
un référencement (312) de la carte (216) de l'endroit fermé par rapport au premier indicateur (118, 116) identifié et au second indicateur (116, 118) identifié pour déterminer un premier axe (220) associé au premier indicateur (118, 116) identifié et au second indicateur (116, 118) identifié sur la carte (216) de l'endroit fermé, dans lequel les premier et second indicateurs sont situés le long du premier axe (220) sur la carte de l'endroit fermé (216), le premier axe (220) formant un premier angle, ω, par rapport à un axe référence (218) de la carte de l'endroit fermé ; et
une détermination (314) d'une orientation du dispositif mobile :
en déterminant un second axe (212) sur lequel les premier et second indicateurs sont situés dans une des une ou plusieurs images capturées ;
en déterminant un second angle, θ, formé par le second axe (212) par rapport à un axe fixe (214) du dispositif mobile (104), ledit axe fixe s'étendant d'un bas à un haut de l'écran du dispositif mobile ; et
en additionnant les premier et second angles pour déterminer l'orientation du dispositif mobile dans l'endroit fermé.

2. Procédé selon la revendication 1, comprenant en outre une réception des premières informations d'identification à partir du premier indicateur et des secondes informations d'identification à partir du second indicateur.

3. Procédé selon la revendication 1, comprenant en outre :
une transmission d'au moins une des une ou plusieurs images capturées et des identités des premier et second indicateurs à un réseau ; et
une réception d'informations concernant l'orientation du dispositif mobile à partir du réseau,
dans lequel une détermination de l'orientation du dispositif mobile est en outre basée sur les informations reçues concernant l'orientation du dispositif mobile.

4. Procédé selon la revendication 1, dans lequel chacun des premier et second indicateurs comprend une diode électroluminescente, LED, configurée pour communiquer les informations d'identification.

5. Procédé selon la revendication 1, dans lequel les premières et secondes informations d'identification comprennent chacune un code QR ou une caractéristique visuelle unique.

6. Procédé selon la revendication 5, dans lequel la caractéristique visuelle unique comprend une couleur ou une forme.

7. Procédé selon la revendication 1, comprenant en outre une réception de la carte par l'intermédiaire d'une communication sans fil.

8. Procédé selon la revendication 7, dans lequel la carte est automatiquement reçue lorsque le dispositif mobile est situé en intérieur.

9. Appareil (500) de communication sans fil, comprenant :
un moyen (506) de capture, sur un écran de l'appareil, d'une ou de plusieurs images d'au moins un premier indicateur (118, 116) et un second indicateur (116, 118), positionnés dans un endroit fermé ;
un moyen (508) d'identification du premier indicateur (118, 116) sur la base de premières informations d'identification et d'identification du second indicateur (116, 118) sur la base de secondes informations d'identification ;
un moyen de détermination d'emplacements respectifs des premier et second indicateurs sur une carte de l'endroit fermé (216), **caractérisé par** :
un moyen (510) de référencement de la carte (216) de l'endroit fermé par rapport au premier indicateur (118, 116) identifié et au second indicateur (116, 118) identifié pour déterminer un premier axe (220) associé au premier indicateur (118, 116) identifié et au second indicateur (116, 118) identifié sur la carte (216) de l'endroit fermé, dans lequel les premier et second indicateurs sont situés le long du premier axe (220) sur la carte (216) de l'endroit fermé, le premier axe (220) formant un premier angle, ω, par rapport à un axe référence (218) de la carte de l'endroit fermé ; et
un moyen (510) de détermination d'une orientation de l'appareil :
par le biais d'un moyen de détermination d'un second axe (212) sur lequel les premier et second indicateurs sont situés dans une des une ou plusieurs images capturées ;
par le biais d'un moyen de détermination d'un second angle, θ, formé par le second axe (212) par rapport à un axe fixe (214) du dispositif mobile (104), ledit axe fixe s'étendant d'un bas à un haut de l'écran du dispositif mobile ; et
par le biais d'un moyen d'addition des premier et second angles pour déterminer l'orientation du dispositif mobile dans l'endroit fermé.

10. Appareil selon la revendication 9, comprenant en outre un moyen de réception des premières informations d'identification à partir du premier indicateur et des secondes informations d'identification à partir du second indicateur.

11. Appareil selon la revendication 9, comprenant en outre :
un moyen de transmission d'au moins une des une ou plusieurs images capturées et des identités des premier et second indicateurs à un réseau ; et
un moyen de réception d'informations concernant l'orientation de l'appareil à partir du réseau,
dans lequel une détermination de l'orientation de l'appareil est en outre basée sur les informations reçues concernant l'orientation de l'appareil.

12. Appareil selon la revendication 9, dans lequel chacun des premier et second indicateurs comprend une diode électroluminescente, LED, configurée pour communiquer les informations d'identification.

13. Appareil selon la revendication 9, dans lequel les premières et secondes informations d'identification comprennent chacune un code QR ou une caractéristique visuelle unique.

14. Appareil selon la revendication 13, dans lequel la caractéristique visuelle unique comprend une couleur ou une forme.

15. Support lisible par ordinateur (606) stockant un code exécutable par ordinateur pour une détermination d'une orientation d'un dispositif mobile dans un endroit fermé, le support lisible par ordinateur comprenant un code pour :
une capture (302), sur un écran du dispositif mobile, d'une ou de plusieurs images d'au moins un premier indicateur (118, 116) et un second indicateur (116, 118), positionnés dans l'endroit fermé ;
une identification (306) du premier indicateur (118, 116) sur la base de premières informations d'identification et une identification du second indicateur (116, 118) sur la base de secondes informations d'identification ;
une détermination (310) d'emplacements respectifs des premier et second indicateurs sur une carte (216) de l'endroit fermé, **caractérisé par** :
un référencement (312) de la carte (216) de l'endroit fermé par rapport au premier indicateur (118, 116) identifié et au second indicateur (116, 118) identifié pour déterminer un premier axe (220) associé au premier indicateur (118, 116) identifié et au second indicateur (116, 118) identifié sur la carte (216) de l'endroit fermé, dans lequel les premier et second indicateurs sont situés le long du premier axe (220) sur la carte de l'endroit fermé, le premier axe (220) formant un premier angle, ω, par rapport à un axe référence (218) de la carte de l'endroit fermé ; et
une détermination (314) d'une orientation d'un dispositif mobile :
en déterminant un second axe (212) sur lequel les premier et second indicateurs sont situés dans une des une ou plusieurs images capturées ;
en déterminant un second angle, θ, formé par le second axe (212) par rapport à un axe fixe (214) du dispositif mobile (104), ledit axe fixe s'étendant d'un bas à un haut de l'écran du dispositif mobile ; et
en additionnant les premier et second angles pour déterminer l'orientation du dispositif mobile dans l'endroit fermé.
